# EUROPÄISCHE PATENTSCHRIFT

(11) **EP 1 851 347 B1**
(45) Veröffentlichungstag und Bekanntmachung des Hinweises auf die Patenterteilung: **03.09.2008**
(21) Anmeldenummer: 06704724.1
(22) Anmeldetag: 24.02.2006
(51) Int. Cl.: C22B 21/00, C22B 9/00, F27B 7/10, F27B 7/20, F27D 13/00

(54) **VERFAHREN ZUM EINSCHMELZEN VON KLEINSTÜCKELIGEM ALUMINIUMSCHROTT MIT THERMISCHER VORBEHANDLUNG**
METHOD FOR MELTING DOWN SMALL-SIZED SCRAP ALUMINIUM WITH THERMAL PRE-TREATMENT
PROCEDÉ DE FUSION DE MITRAILLE D ALUMINIUM EN PETITS MORCEAUX AVEC PRETRAITEMENT THERMIQUE

(30) Priorität: 24.02.2005 AT 3132005
(43) Veröffentlichungstag der Anmeldung: 07.11.2007
(73) Patentinhaber: Hertwich Engineering GmbH, 5280 Braunau (AT)
(72) Erfinder: MAYRINGER, Hubert, A 4982 St Georgen 31 (AT); HERTWICH, Günther, A-5280 Braunau am Inn (AT); NIEDERMAIR, Franz, A-5280 Braunau am Inn (AT)
(74) Vertreter: Hübscher, Helmut
(86) Internationale Anmeldenummer: PCT/AT2006/000082
(87) Internationale Veröffentlichungsnummer: WO 2006/089332

(56) Entgegenhaltungen:
- EP-A- 0 787 810
- DE-A1- 3 444 181
- US-A- 4 010 935
- US-A- 4 676 742
- PATENT ABSTRACTS OF JAPAN Bd. 1996, Nr. 04, 30. April 1996 (1996-04-30) & JP 07 324870 A (TOPY IND LTD), 12. Dezember 1995 (1995-12-12)
- DATABASE WPI Section Ch, Week 198745 Derwent Publications Ltd., London, GB; Class M25, AN 1987-317690 XP002390281 & JP 62 225889 A (HITACHI PLANT ENG & CONSTR CO) 3. Oktober 1987 (1987-10-03)

## Beschreibung

### Technisches Gebiet

Die Erfindung bezieht sich auf ein Verfahren zum Einschmelzen von kleinstükkeligem Aluminiumschrott, wobei der einzuschmelzende Aluminiumschrott nach einer thermischen Vorbehandlung in einem Heißgasstrom in einem Ofen geschmolzen wird.

### Stand der Technik

Kleinstückelige Aluminiumschrotte, insbesondere Aluminiumspäne, aber auch Dosen- und Folienschrott, weisen im allgemeinen organische Verunreinigungen in Form von Schneidmitteln, Ölen, Lacken, Kunststoffen und dgl. auf, die beim Einschmelzen des Aluminiumschrottes eine die Prozeßführung beeinträchtigende, schlagartige Freisetzung erheblicher Mengen an Schwelgasen bedingen. Aus diesem Grunde wird der einzuschmelzende Aluminiumschrott einer thermischen Vorbehandlung unterworfen, um mit Hilfe von Heißgasen die organischen Verunreinigungen abzubauen. Die dabei anfallenden, Kohlenwasserstoffe enthaltenden Schwelgase werden einer Nachverbrennung zugeführt. Nachteilig bei dieser thermischen Vorbehandlung des einzuschmelzenden Aluminiumschrottes üblicherweise in Drehtrommeln ist der vergleichsweise hohe Energiebedarf und der mit der Zwischenlagerung des vorbehandelten Aluminiumschrottes verbundene Energieverlust durch die Schrottabkühlung, die außerdem die Kondensation von Luftfeuchtigkeit auf dem zwischengelagerten Aluminiumschrott mit dem Nachteil fördert, daß beim nachfolgenden Einschmelzen des Aluminiumschrottes der Wasserstoffgehalt der Schmelze erhöht wird und der Sauerstoff zu einer zusätzlichen Oxidation des Aluminiumschrottes und damit zu einem Metallverlust führt.

### Darstellung der Erfindung

Der Erfindung liegt somit die Aufgabe zugrunde, ein Verfahren zum Einschmelzen von kleinstückeligem Aluminiumschrott der eingangs geschilderten Art so auszugestalten, daß der Energiebedarf bei einer vorteilhaften Verfahrensführung erheblich verringert werden kann.

Die Erfindung löst die gestellte Aufgabe dadurch, daß der Aluminiumschrott in einem kontinuierlichen Gutstrom zunächst der thermischen Behandlung unterworfen und dann eingeschmolzen wird und daß von dem in einem Kreislauf geführten Heißgasstrom zur thermischen Behandlung des Aluminiumschrottes ein Teilstrom abgezweigt und in den Ofen geleitet wird.

Da zufolge dieser Maßnahmen der Aluminiumschrott in einem kontinuierlichen Gutstrom zunächst der thermischen Behandlung unterworfen und dann eingeschmolzen wird, entfällt die sonst übliche Zwischenlagerung, so daß die mit einer solchen Zwischenlagerung verbundenen Nachteile hinsichtlich des Energieverlustes durch eine Abkühlung einerseits und oxidationsbedingter Metallverluste anderseits vermieden werden. Dazu kommt, daß die Heißgase zur Wärmebehandlung des Aluminiumschrottes in einem Kreislauf geführt werden, was den Energiebedarf für die Wärmebehandlung herabsetzt. Da ein Teilstrom des mit den Schwelgasen angereicherten Heißgasstromes in den Ofen geleitet wird und dort die Schwelgase verbrannt werden, können die Schwelgase in einfacher Weise einen Teil der erforderlichen Schmelzenergie bereitstellen, was den Gesamtenergiebedarf weiter vermindert.

Die durch die Wärmebehandlung des Aluminiumschrottes bedingten Wärmeverluste der Heißgase müssen durch eine entsprechende Wärmezufuhr ausgeglichen werden. Übersteigt die Menge des in den Ofen abgezweigten Teilstromes die anfallende Schwelgasmenge, so ist außerdem der Gasverlust zu ersetzen. Diese Anforderungen können in vorteilhafter Weise dadurch erfüllt werden, daß in den Kreislauf des Heißgasstrome heiße Brenngase eingespeist werden. Anstelle der heißen Brenngase können aber auch heiße Ofenabgase in den Heißgaskreislauf eingeführt werden, wodurch der Verfahrensablauf zusätzlich vereinfacht wird, weil sich gesonderte Brenner erübrigen.

Zur Durchführung des Einschmelzverfahrens kann von einem mit Heißgasen beaufschlagbaren Trockner für den kleinstückeligen Aluminiumschrott und von einem Ofen zum Einschmelzen des im Trockner wärmebehandelten Aluminiumschrottes ausgegangen werden. Es braucht lediglich der Trockner an den Ofen angeschlossen und in einen Heißgaskreislauf eingebunden zu werden, von dem eine Zweigleitung in den Ofen mündet, um einerseits den Aluminiumschrott unmittelbar nach seiner thermischen Behandlung im Trockner ohne Wärmeverluste in den Ofen fördern und anderseits die bei der thermischen Behandlung des Aluminiumschrottes anfallenden Schwelgase energetisch für das Einschmelzen des Aluminiumschrottes nützen zu können.

Zur Erwärmung der im Kreislauf geführten Heißgase kann wenigstens ein Brenner vorgesehen werden, dessen heiße Brenngase in den Heißgasstrom eingeleitet werden. Auf einen gesonderten Brenner zum Erwärmen der Heißgase kann allerdings verzichtet werden, wenn der Heißgaskreislauf an eine Zuleitung für heiße Ofenabgase angeschlossen wird, die ebenfalls für einen Ausgleich der Wärme- und Gasverluste genützt werden können.

Aufgrund der Abhängigkeit der Oxidationsvorgänge von der Verweilzeit des Aluminiumschrottes im Trockner ist für einen guten Wärmeübergang von den Heißgasen auf den Aluminiumschrott zu sorgen. Zu diesem Zweck kann der Trockner einen Förderer mit einer gasdurchlässigen Aufnahme für das Fördergut aufweisen, durch die der im Kreislauf geführte Heißgasstrom abgesaugt wird, so daß das Gutbett von den Heißgasen von oben nach unten durchströmt wird. Diese Heißgasführung stellt einen weitgehend gleichmäßigen Wärmeübergang über die Höhe des Gutbettes sicher, was vergleichsweise kurze Behandlungszeiten ermöglicht. Zur Verbesserung des Wärmeübergangs kann der Trockner aus einer Förderstrecke für den Aluminiumschrott mit dem Heißgasstrom als Fördermittel gebildet werden, wobei an die Förderstrecke ein Zyklonabscheider für den wärmebehandelten Aluminiumschrott angeschlossen wird, um den Aluminiumschrott aus dem Heißgasstrom abzuscheiden und in den Ofen einzuleiten. Der Einsatz eines solchen Trockners ist allerdings von der Teilchengröße des Aluminiumschrottes abhängig, weil diese Aluminiumteilchen mit dem Heißgasstrom als Fördermittel entlang der Förderstrecke unter einer innigen Mischung mit den Heißgasen fliegend bewegt werden müssen.

### Kurze Beschreibung der Zeichnung

Anhand der Zeichnung wird das erfindungsgemäße Verfahren zum Einschmelzen von kleinstückeligem Aluminiumschrott näher erläutert. Es zeigen ,
- Fig. 1: eine erfindungsgemäße Vorrichtung zum Einschmelzen von kleinstückeligem Aluminiumschrott in einem schematischen Blockschaltbild und
- Fig. 2: eine der Fig. 1 entsprechende Darstellung einer Ausführungsvariante einer erfindungsgemäßen Vorrichtung.

### Weg zur Ausführung der Erfindung

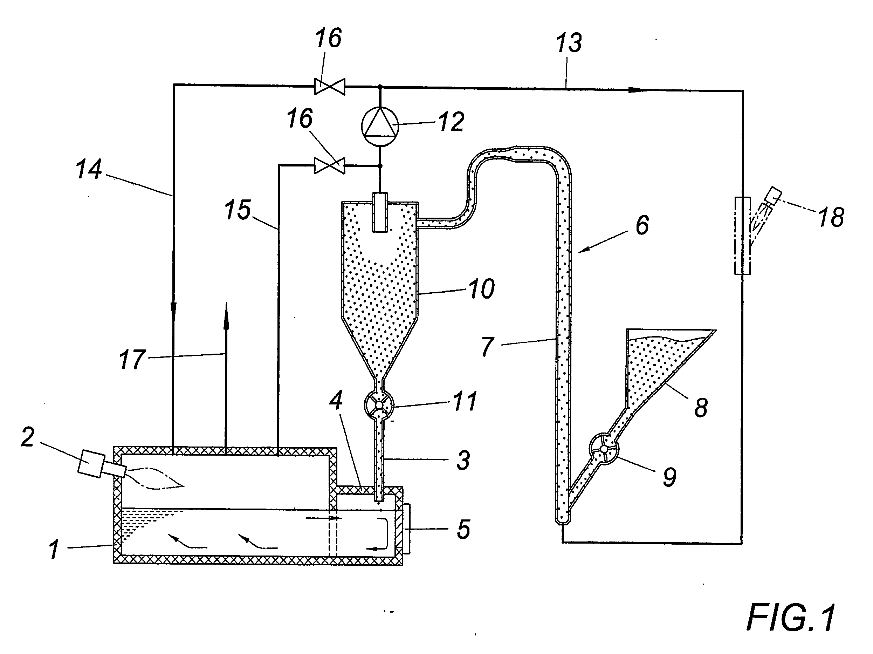

Gemäß der Fig. 1 weist die dargestellte Vorrichtung zum Einschmelzen von Aluminiumschrott, insbesondere von Aluminiumspänen, einen Ofen 1 auf, der beispielsweise mit Hilfe wenigstens eines Brenners 2 beheizt wird. Der Aluminiumschrott wird dem Ofen über einen Fallschacht 3 zugefördert, und zwar im Bereich einer Ofentasche 4 die mit einem Induktor 5 ausgerüstet ist, dessen elektromagnetisches Feld eine nach unten gerichtete Strömung des Bades aus bereits eingeschmolzenem Aluminiumschrott induziert, so daß die aus dem Fallschacht 3 in den Ofen 1 fallenden Schrotteile von dieser Badströmung erfaßt und unter die Badoberfläche gezogen werden, was im Hinblick auf sonst mögliche Oxidationsvorgänge von Bedeutung ist. Der Aluminiumschrott muß allerdings vor dem Einschmelzen einer thermischen Vorbehandlung unterworfen werden, was in einem dem Ofen 1 vorgeschalteten Trockner 6 durchgeführt wird. Dieser Trockner 6 besteht im Falle des Ausführungsbeispieles nach der Fig. 1 aus einer Förderstrecke 7, der der zu behandelnde Schrott aus einem Vorratsbehälter 8 über eine Zellenradschleuse 9 dosiert aufgegeben wird. Der kleinstückelige Aluminiumschrott wird mit Hilfe eines Heißgasstromes entlang der Förderstrecke 7 gefördert, um eine innige Mischung zwischen dem Heißgas und den Schrotteilchen und damit einen guten und raschen Wärmeübergang auf die Schrotteilchen sicherzustellen. Nach dem Durchlaufen der Förderstrecke 7 wird der Aluminiumschrott aus dem Heißgasstrom mit Hilfe eines Zyklonabscheiders 10 abgeschieden, aus dem der Fallschacht 3 über eine Zellenradschleuse 11 mit Aluminiumschrott beschickt wird. Die Heißgase, die die während der Wärmebehandlung des Aluminiumschrottes anfallenden, kohlenwasserstoffhältigen Schwelgase aufnehmen, werden mit Hilfe eines Gebläses 12 aus dem Zyklonabscheider 10 abgesaugt und in einem Kreislauf 13 wieder der Förderstrecke 7 zugeführt. Ein Teilstrom der mit Schwelgasen angereicherten Heißgase wird über eine Zweigleitung 14 aus dem Kreislauf 13 ausgeschieden und dem Ofen 1 zugeleitet, um den Schwelgasanteil im Ofen 1 zu verbrennen, dessen Atmosphäre üblicherweise einen Sauerstoffgehalt im Bereich von 1 bis 8 % aufweist.

Zum Erwärmen der Heißgase ist der Heißgaskreislauf 13 an eine Zuleitung 15 für heiße Ofenabgase angeschlossen, die dem Heißgasstrom im Kreislauf 13 zugemischt werden, wobei nicht nur die durch die Wärmebehandlung des Aluminiumschrottes im Trockner 6 bedingten Wärmeverluste des Heißgasstromes, sondern auch der Gasverlust durch das Ausscheiden eines Teilgasstromes aus dem Kreislauf 13 ausgeglichen werden. Durch Steuerventile 16 in der Zweigleitung 14 und in der Zuleitung 15 können die Massenströme den jeweiligen Anforderungen entsprechend angepaßt werden. Die nicht für die Erwärmung der Heißgase benötigten Ofenabgase werden in herkömmlicher Art über eine Abgasleitung 17 aus dem Ofen abgezogen. Anstelle der heißen Ofenabgase können die Heißgase im Kreislauf 13 auch durch einen Brenner 18 erwärmt werden, dessen heiße Brenngase mit den Heißgasen im Kreislauf 13 vermischt werden, wie dies in der Fig. 1 strichpunktiert angedeutet ist.

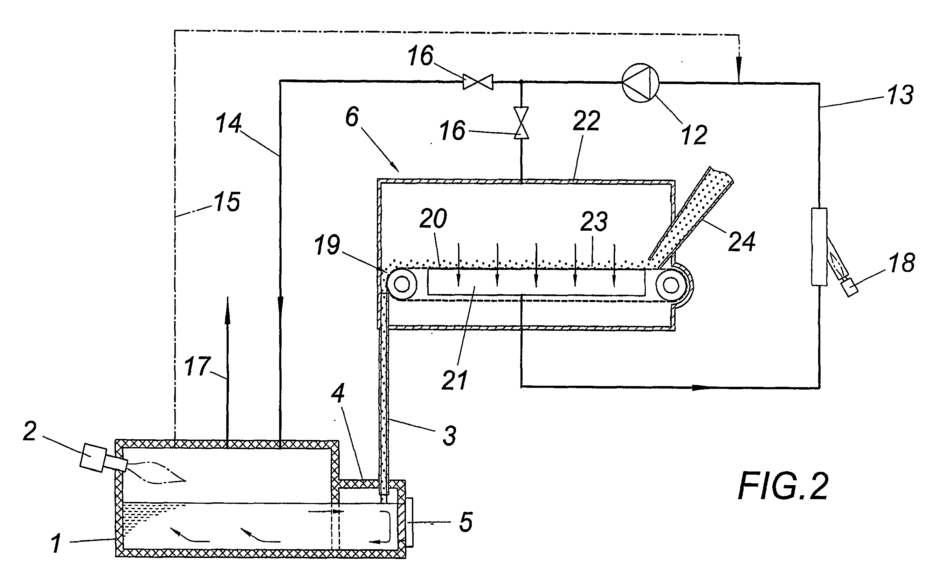

Die Vorrichtung nach der Fig. 2 unterscheidet sich von der gemäß der Fig. 1 im wesentlichen nur durch den Aufbau des Trockners 6. Dieser Trockner 6 weist einen Förderer 19 mit einer gasdurchlässigen Aufnahme für das Fördergut in Form eines umlaufenden Bandes auf, dessen die Aufnahme für das Fördergut bildendes Fördertrum 20 einen Saugkasten 21 nach oben abschließt. Da das Gehäuse 22 des Trockners 6 an die Druckseite und der Saugkasten 21 an die Saugseite des Gebläses 12 des Kreislaufes 13 für die Heißgasströmung angeschlossen sind, wird die Heißgasströmung durch das Gutbett 23 auf dem Fördertrum 20 des Förderers 19 durchgesaugt, was bei einer gleichmäßigen Betthöhe zu einer gleichmäßigen Erwärmung des Aluminiumschrottes führt, der über eine Schurre 24 auf den Förderer 19 aufgebracht wird. Nach der Wärmebehandlung wird der Aluminiumschrott vom Förderer 19 in den Fallschacht 3 abgeworfen, um in der im Zusammenhang mit der Fig. 1 beschriebenen Art und Weise eingeschmolzen zu werden. Die Heißgase im Kreislauf 13 werden durch einen Brenner 18 erwärmt, dessen heiße Brenngase sich mit den Heißgasen des Kreislaufes 13 mischen. Es ist aber auch möglich, die Erwärmung der Heißgase mit Hilfe der heißen Ofenabgase durchzuführen, wie dies durch eine strichpunktiert angedeutete Zuleitung 15 für solche Ofenabgase angedeutet ist. Die Verbrennung der während der Wärmebehandlung des Aluminiumschrottes im Trockner 6 anfallenden Schwelgase erfolgt in analoger Weise zum Ausführungsbeispiel gemäß der Fig. 1, indem ein Teilstrom der mit den Schwelgasen angereicherten Heißgase über eine Zweigleitung 14 aus dem Kreislauf 13 der Heißgase ausgeschieden und dem Ofen 1 zugeführt wird.

## Patentansprüche

1. Verfahren zum Einschmelzen von kleinstückeligem Aluminiumschrott, wobei der einzuschmelzende Aluminiumschrott nach einer thermischen Vorbehandlung in einem Heißgasstrom in einem Ofen geschmolzen wird, **dadurch gekennzeichnet, daß** der Aluminiumschrott in einem kontinuierlichen Gutstrom zunächst der thermischen Behandlung unterworfen und dann eingeschmolzen wird und daß von dem in einem Kreislauf geführten Heißgasstrom zur thermischen Behandlung des Aluminiumschrottes ein Teilstrom abgezweigt und in den Ofen geleitet wird.

2. Verfahren nach Anspruch 1 **dadurch gekennzeichnet, daß** in den Kreislauf des Heißgasstromes heiße, einen Teil des abgezweigten Teilgasstromes ersetzende Brenngase eingespeist werden.

3. Verfahren nach Anspruch 1 oder 2, **dadurch gekennzeichnet, daß** in den Kreislauf des Heißgasstromes heiße, einen Teil des abgezweigten Teilgasstromes ersetzende Ofenabgase eingespeist werden.

4. Vorrichtung zum Durchführung des Verfahrens nach einem der Ansprüche 1 bis 3 mit einem mit Heißgasen beaufschlagbaren Trockner für den kleinstückeligen Aluminiumschrott und mit einem Ofen zum Einschmelzen des im Trockner (6) thermisch behandelten Aluminiumschrottes, **dadurch gekennzeichnet, daß** der an den Ofen (1) angeschlossene Trockner (6) in einen Heißgaskreislauf (13) eingebunden ist, von dem eine Zweigleitung (14) in den Ofen (1) mündet.

5. Vorrichtung nach Anspruch 4, **dadurch gekennzeichnet, daß** der Heißgaskreislauf (13) wenigstens einen Brenner (18) aufweist.

6. Vorrichtung nach Anspruch 4 oder 5, **dadurch gekennzeichnet, daß** in den Heißgaskreislauf (13) eine Zuleitung (15) für heiße Ofenabgase mündet.

7. Vorrichtung nach einem der Ansprüche 4 bis 6, **dadurch gekennzeichnet, daß** der Trockner (6) einen Förderer (19) mit einer gasdurchlässigen Aufnahme für das Fördergut aufweist, durch die der im Kreislauf (13) geführte Heißgasstrom absaugbar ist.

8. Vorrichtung nach einem der Ansprüche 4 bis 6, **dadurch gekennzeichnet, daß** der Trockner (6) aus einer Förderstrecke (7) für den Aluminiumschrott mit dem Heißgasstrom als Fördermittel besteht und daß an die Förderstrecke (7) ein Zyklonabscheider (10) für den wärmebehandelten Aluminiumschrott angeschlossen ist.

## Claims

1. Method for melting down small sized pieces of scrap aluminium, wherein the scrap aluminium to be melted down is melted in a furnace after undergoing thermal pretreatment in a hot gas stream, **characterised in that** the scrap aluminium in a continuous stream of material is initially subjected to thermal treatment and is then melted down and that from the hot gas stream, which is directed in a circuit, for the thermal treatment of the scrap aluminium a partial stream is branched off and guided into the furnace.

2. Method as claimed in claim 1, **characterised in that** hot burnable gases which replace a portion of the branched-off partial gas stream are fed into the circuit of the hot gas stream.

3. Method as claimed in claim 1 or 2, **characterised in that** hot furnace exhaust gases which replace a portion of the branched-off partial gas stream are fed into the circuit of the hot gas stream.

4. Device for carrying out the method as claimed in any one of claims 1 to 3, having a dryer, which can be influenced by hot gases, for the small sized pieces of scrap aluminium, and having a furnace for melting down the scrap aluminium which is thermally treated in the dryer (6), **characterised in that** the dryer (6) which is connected to the furnace (1) is incorporated into a hot gas circuit (13), from which a branch line (14) issues into the furnace (1).

5. Device as claimed in claim 4, **characterised in that** the hot gas circuit (13) comprises at least one burner (18).

6. Device as claimed in claim 4 or 5, **characterised in that** a supply line (15) for hot furnace exhaust gases issues into the hot gas circuit (13).

7. Device as claimed in any one of claims 4 to 6, **characterised in that** the dryer (6) comprises a conveyor (19) having a gas-permeable receiver for the conveyed material, through which the hot gas stream directed in the circuit (13) can be siphoned off.

8. Device as claimed in any one of claims 4 to 6, **characterised in that** the dryer (6) consists of a conveying path (7) for the scrap aluminium with the hot gas stream as a conveying means and that a cyclone separator (10) for the heat-treated scrap aluminium is connected to the conveying path (7).

## Revendications

1. Procédé de fusion de mitraille d'aluminium en petits morceaux, où la mitraille d'aluminium à mettre en fusion, après avoir subi un prétraitement thermique dans un flux de gaz chauds, est mise en fusion dans un four, **caractérisé en ce que** la mitraille d'aluminium est d'abord soumise au traitement thermique, en un flux continu de produit, puis mise en fusion, et **en ce que**, du flux de gaz chaud mis en circulation pour effectuer le traitement thermique de la mitraille d'aluminium, un flux partiel est prélevé et est passé dans le four.

2. Procédé selon la revendication 1, **caractérisé en ce que,** dans le circuit du flux de gaz chaud, sont injectés des gaz de combustion chauds, remplaçant une partie du flux partiel prélevé.

3. Procédé selon la revendication 1 ou 2, **caractérisé en ce que,** dans le circuit du flux de gaz chaud, sont injectés des gaz d'échappement de four, remplaçant une partie du flux partiel prélevé.

4. Dispositif de mise en oeuvre du procédé selon l'une des revendications 1 à 3, avec un séchoir alimenté avec des gaz chauds, pour la mitraille d'aluminium en petits morceaux, et avec un four pour mettre en fusion la mitraille d'aluminium ayant été traitée thermiquement dans le séchoir (6), **caractérisé en ce que** le séchoir (6), raccordé au four (1), est intégré dans un circuit de gaz chauds (13), dont une conduite de ramification (14) débouche dans le four (1).

5. Dispositif selon la revendication 4, **caractérisé en ce que** le circuit de gaz chauds (13) présente au moins un brûleur (18).

6. Dispositif selon la revendication 4 ou 5, **caractérisé en ce qu'**une conduite d'alimentation (15), pour des gaz d'échappement de four chauds, débouche dans le circuit de gaz chauds (13).

7. Dispositif selon l'une des revendication 4 à 6, **caractérisé en ce que** le séchoir (6) présente un transporteur (19) avec un support, perméable aux gaz, pour le produit à transporter, support à travers lequel le flux de gaz chaud, guidé dans le circuit (13), peut être aspiré.

8. Dispositif selon l'une des revendication 4 à 6, **caractérisé en ce que** le séchoir (6) est composé d'une veine de transport (7) pour la mitraille d'aluminium, avec le flux de gaz chaud faisant office de moyen de transport, et **en ce qu'**un séparateur cyclone (10), pour la mitraille d'aluminium ayant été traitée thermiquement, est raccordé à la veine de transport (7).
